# EUROPÄISCHE PATENTSCHRIFT

(11) **EP 3 281 850 B1**
(45) Veröffentlichungstag und Bekanntmachung des Hinweises auf die Patenterteilung: **14.07.2021**
(21) Anmeldenummer: 17186013.3
(22) Anmeldetag: 11.08.2017
(51) Int. Cl.: B62H 5/00, B62J 19/00

(54) **VORRICHTUNG ZUM ZUGRIFFSSCHUTZ AUF EIN ZWEIRAD SOWIE SYSTEM**
DEVICE FOR ACCESS PROTECTION FOR A TWO WHEELED VEHICLE AND SYSTEM
DISPOSITIF DE PROTECTION D'ACCÈS À UN BICYCLE AINSI QUE SYSTÈME

(30) Priorität: 11.08.2016 DE 202016104436 U
(43) Veröffentlichungstag der Anmeldung: 14.02.2018
(73) Patentinhaber: Huber, Andreas, 78194 Immendingen (DE)
(72) Erfinder: Huber, Andreas, 78194 Immendingen (DE)
(74) Vertreter: Patent- und Rechtsanwälte Behrmann Wagner PartG mbB

(56) Entgegenhaltungen:
- CN-U- 204 728 842
- DE-U1- 9 305 623
- FR-A1- 2 623 456
- FR-A1- 2 629 764
- FR-A1- 3 029 872
- US-A- 5 372 169
- US-A1- 2013 033 381
- US-B2- 8 854 207

## Beschreibung

Die vorliegende Erfindung betrifft eine Vorrichtung zum Zugriffsschutz auf ein Zweirad nach dem Oberbegriff des Hauptanspruchs. Ferner betrifft die vorliegende Erfindung ein System, welches eine derartige Vorrichtung zum Zugriffsschutz aufweist.

Gattungsgemäße Vorrichtungen zum Zugriffsschutz auf ein zu schützendes mobiles Objekt, etwa in Form eines Zweirades, sind aus dem Stand der Technik allgemein bekannt. So sind etwa Abdeckhauben aus polymeren Materialien zum Schutz von höherwertigen Zweirädern, etwa Motorrädern, allgemein bekannt, die einen Staub- und Wetterschutz bieten und zu diesem Zweck über das Zweirad gespannt werden. Teilweise sind derartige Abdeckhauben auch blickundurchlässig und etwa zu Werbezwecken mit dekorativen Aufdrucken versehen. Allerdings ist eine derartige Abdeckhaube im Regelfall nur teilweise auf dem Zweirad vorsehbar und zudem häufig mit Blickfenstern od.dgl. Öffnungen versehen, so dass bei derartigen bekannten Vorrichtungen der Staub- und Wetterschutz im Vordergrund steht. Zudem ist die Montage derartiger Abdeckhauben häufig mühsam, da zum Spannen vorgesehene Gummibänder sowie Haken umständlich am Zweirad festgelegt werden müssen. Dies führt zudem dazu, dass im Regelfall eine derartige Abdeckhaube selbst nicht gesichert ist und durch Unbefugte leicht abgenommen werden kann.

Mit diesen Eigenschaften eignet sich damit eine den gattungsgemäßen Stand der Technik repräsentierende übliche Abdeckhaube für Zweiräder nicht, ein solches Zweirad wirksam zu schützen, gerade im Hinblick auf den Zugriffsschutz auf verbaute, hochwertige Anbauteile eines hochwertigen Zweirads: So ist nämlich insbesondere in jüngerer Zeit ein Trend zu zunehmend höherwertigen Zweirädern - Fahrräder, E-Bikes, Pedelecs, Motorräder, mit hochwertiger Ausstattung - mit entsprechendem Schutzbedarf zu beobachten, wobei es hier, neben einem grundsätzlichen Schutz des Zweirades vor Diebstahl als Ganzes, insbesondere auch um die Problematik geht, hochwertige Anbauteile (Spiegel, Sättel, Sattelstützen, GPS-Navigationsgeräte und dgl.) vor einem unbeabsichtigten Diebstahl durch Abmontieren zu schützen.

Die zum gattungsgemäßen Stand der Technik beschriebenen Abdeckhauben gewährleisten nämlich weder einen Schutz vor unbeabsichtigem Zugriff auf diese Anbauteile (selbst wenn das Zweirad als Ganzes durch Anschließen gesichert ist), noch sorgen die Eigenschaften dieser Abdeckhaube - insbesondere leichtes und bereits oftmals durch manuelles Reißen zerstörbares Material - für einen wirksamen Zugriffschutz auf die schutzbedürftigen Anbauteile.

Zwar ist es prinzipiell als bekannt vorauszusetzen, auch diese zu schützenden Anbauteile eines Zweirades jeweils für sich zu schützen, etwa durch jeweils zugeordnete Schlösser od.dgl. Verschlussmechanismen, wie sie etwa für Motorrad-Navigationssysteme bekannt sind. Derartige Einzellösungen sind jedoch in einem Gesamtzusammenhang wenig praktikabel, insbesondere wenn das hochwertige Zweirad eine Vielzahl von jeweils isoliert schutz- und verschlussbedürftigen Zubehörkomponenten aufweist. Der denkbare Ansatz, bei einem Abstellen des Zweirades dann jeweils diese Zubehörkomponenten abzunehmen und mitzuführen, ist im Regelfall aufwendig, unkomfortabel und wird von Eigentümern dieser Zweiräder häufig nicht akzeptiert.

Einen völlig anderen Ansatz zum Schutz wertvoller Anbauteile an Zweirädern wird geboten durch als bekannt vorauszusetzende Fahrrad-Mietboxen, welche als stationäre Einheiten häufig an Bahnhöfen od.dgl. Orten vorhanden sind und Nutzern, üblicherweise gegen Gebühr oder andere Organisationsmechanismen, zur zeitweisen Nutzung verschlussgesichert angeboten werden. Während derartige Lösungen einen guten Zugriffsschutz bieten, sind sie aufgrund ihrer stationären Eigenschaften immobil und nicht für ein Abstellen des Zweirades an beliebigen Standorten geeignet, hinzu kommt der prinzipielle Nachteil des Kostenaufwandes und der zugehörige Verwaltungs- bzw. Administrationsaufwand durch den notwendigen Mietvorgang, der zudem häufig wenig komfortabel und praktikabel ist.

Ferner sind aus dem Stand der Technik auch die Druckschriften FR 3 029 872 A1, FR 2 623 456 A1, US 5 372 169 A, FR 2 629 764 A1 sowie die DE 93 05 623 U1 bekannt, wobei die FR 3 029 872 A1 die Merkmale der Präambel des Anspruchs 1 zeigt.

Aufgabe der vorliegenden Erfindung ist es daher, eine Vorrichtung zum Zugriffsschutz auf ein zu schützendes mobiles Objekt nach dem Obergriff des Hauptanspruchs zu schaffen, welche insbesondere Zubehörkomponenten am mobilen Objekt, etwa an einem Zweirad, sicher und zuverlässig und dabei mit geringem Aufwand vor unbeabsichtigem Zugriff bzw. Diebstahl schützt. Dabei soll insbesondere eine derartige Vorrichtung leicht und komfortabel in der Anbringung und im Gebrauch sein, eine einfache und kostengünstige Herstellung gestatten und dem Nutzer die Möglichkeit geben, an beliebigen Aufstellungsorten das Zweirad zu schützen, um damit nicht von stationären Lösungen abhängig zu sein.

Diese Aufgabe wird durch die Vorrichtung zum Zugriffsschutz auf ein zu schützendes mobiles Objekt nach dem Oberbegriff des Hauptanspruchs gelöst; vorteilhafte Weiterbildungen der Erfindung sind in den Unteransprüchen beschrieben. Unabhängiger Schutz im Rahmen der Erfindung wird beansprucht für ein System aufweisend eine derartige Vorrichtung zum Zugriffsschutz sowie ein darin aufgenommenes mobiles Objekt, welches bevorzugt im Rahmen der Erfindung der Gruppe bestehend aus Zweirädern, Motorrädern, Mofas, Rollern, E-Bikes und Pedelecs zugeordnet werden kann, ohne dass dies den Anwendungsbereich der Erfindung beschränkt.

In erfindungsgemäß vorteilhafter Weise sorgt zunächst die erfindungsgemäße und weiter bevorzugt blickdicht ausgestaltete Planenstruktur dafür, dass das mobile Objekt vollständig umhüllt werden kann. Damit ist weder ein visuelles Erfassen des Zweirades (eingeschlossen etwaiger daran befestigter hochwertiger Komponenten) durch eine unbefugte Person möglich, noch kann ohne weiteres durch diese Umhüllung zugegriffen werden. Als "vollständig" im Rahmen der Erfindung gilt dabei eine solche Umhüllung, die keine randseitigen oder mittleren Zugriffsmöglichkeiten bei aufgebrachter Planenstruktur zulässt, insbesondere auch keinen Zugriff von einer unteren Seite, wie es etwa bei traditionellen Abdeckhauben der Fall gewesen ist.

Synergistisch unterstützt wird diese technische Maßnahme durch die erfindungsgemäße Eigenschaft der Planenstruktur, aus einem nicht manuell zerreißbaren Textil- bzw. Kunststoffgewebe zu bestehen. Weiterbildend und gemäß einer bevorzugten Ausführungsform ausgebildet aus Aramid (Handelsname Kevlar) oder einem derartigen reißfesten und schnittfesten Material, ermöglicht eine erfindungsgemäße Planenstruktur den sicheren Schutz der Gesamtanordnung des mobilen Objekts, insbesondere auch ohne die Notwendigkeit, besonders sensible, diebstahlsgefährdete Komponenten nach einem Abstellen entfernen zu müssen. Die schnittfeste bzw. reißfeste Eigenschaft dieses Materials bewirkt zudem, dass selbst mit üblichen Werkzeugen Dritte sich nicht ohne erheblichen Aufwand Zugriff auf den Innenraum der aufgebrachten Planenstruktur verschaffen können. Zudem weisen die weiterbildungsgemäß verwendeten Aramide (bzw. die reißfesten und schnittfesten Materialien) zur Realisierung dieses Textil- bzw. Kunststoffgewebes die Eigenschaft auf, leicht, einfach faltbar und damit im Prinzip auch leicht transportabel zu sein, so dass insbesondere bereits durch diese erfindungsgemäße Maßnahme die Voraussetzung geschaffen wird, dass die Bedienperson bzw. der Führer des mobilen Objekts die Planenstruktur, geeignet in einem gefalteten Transportzustand vorliegend, mit sich führen kann.

Alternativ oder ergänzend kann die erfindungsgemäße nicht zerreißbare Eigenschaft der Planenstruktur auch durch eine metallisierte Gewebestruktur, durch ein metallhaltiges Mischgewebe oder eine andere metallische oder metallhaltige Planenstruktur realisiert werden. Insbesondere Gewebe in Form von kunststoffummantelten Stahlfasern eignen sich vorteilhaft. Insoweit umfasst der Erfindungsbegriff "Textil- und/oder Kunststoffgewebe" auch derartige metallhaltige bzw. metallisierte Gewebe. Eine solche Planenstruktur lässt sich dann zusätzlich weiterbildend auch elektronisch auf einen externen Zugriff überwachen, in dem etwa eine geeignete randseitige Kontaktierung erfolgt und ein elektrischer Widerstand überwacht wird.

Wiederum im Zusammenhang mit den vorstehend diskutierten Eigenschaften der erfindungsgemäßen Planenstruktur steht das Merkmal, dass dieser erfindungsgemäß Mittel zum zugriffsgeschützten Verschließen dieser Struktur zugeordnet sind. Dies sorgt dann vorteilhaft dafür, dass etwa ein unbefugter Dritter die Planenstruktur im montierten Zustand, also bei vollständig umhülltem mobilem Objekt, nicht einfach wieder entfernen kann. Hierfür sorgt dann in praktischen Ausgestaltungen etwa eine geeignete Schloss- bzw. Kettenstruktur, welche dann auch auf gängige Verschlusslösungen, die als solche bekannt sind, zugreifen kann.

Im Ergebnis sorgt damit die erfindungsgemäße Vorrichtung mittels der anspruchsgemäß ausgestalteten Planenstruktur dafür, dass das mobile Objekt, bevorzugt ein hochwertig ausgestattetes Zweirad, nicht nur zuverlässig mit all seinen Anbauobjekten geschützt werden kann, auch ist zusätzlich und vorteilhaft ein Schutz vor Witterungseinflüssen wie Schnee oder Regen ebenso ermöglicht, wie etwa ein Schutz vor Verschmutzungen, wie es etwa durch Blütenstaub, Sand od.dgl. nachteilig bei unvollständig umhüllten Objekten auftreten kann.

Besonders bevorzugte Weiterbildungen der Erfindung sehen vor, die erfindungsgemäße Planenstruktur großflächig so auszugestalten, dass diese, etwa quadratisch oder mit Vieleck-Kontur ausgestaltet, eine Mindestkantenlänge von 1m, weiter bevorzugt eine Mindestkantenlänge von 1,5 m, weiter bevorzugt eine Mindestkantenlänge von 2m aufweist, so dass insbesondere Zweiräder mit einer Länge zwischen 1,5m und 2,5m und einer Höhe zwischen 1m und 2m zuverlässig beidseits umhüllt werden können. Mit dieser bevorzugten Weiterbildung eignet sich die vorliegende Erfindung in besonders geeigneter Weise für das bevorzugte (jedoch nicht ausschließliche) Anwendungsgebiet der motorisierten oder nichtmotorisierten Zweiräder.

Ferner ist hierbei auch eine Ausbildung der Planenstruktur bevorzugt, die eine lokale Material- bzw. Planenoberflächenvergrößerung, etwa in Form einer Ausbuchtung zur Aufnahme des Lenkers eines mobilen Objekts, vorsieht. Dies ermöglicht vorteilhaft die Größe und das Gewicht der Planenstruktur zu optimieren, wodurch das Packmaß der Planenstruktur möglichst klein gehalten wird. Für eine optimale Anpassung der Planenstruktur an das mobile Objekt sind zudem unterschiedliche Ausführungsformen der erfindungsgemäßen Planenstruktur geplant, die sich in Form und/oder der Größe unterscheiden.

Eine weiter bevorzugte Ausführungsform sieht eine besondere Eignung der Erfindung zur Umhüllung von Wertgegenständen vor, die kleiner als die zuvor diskutierten Zweiräder sind. Gerade die weiterbildende Quadratform mit den angegebenen kürzeren Kantendimensionen bezieht die Erfindung insbesondere auf Geldbeutel und/oder Mobiltelefone und ermöglicht damit den Zugriffsschutz an öffentlichen Orten, wie beispielsweise in Schwimmbädern oder an Baggerseen.

In erfindungsgemäß vorteilhafter Weise und weiterbildend ist vorgesehen, die erfindungsgemäße Planenstruktur aus einer großflächigen Flächenstruktur zu realisieren, auf welche das mobile Objekt (etwa im Fall des Zweirades durch Aufschieben) aufgebracht werden kann, und dessen großflächige Flächenstruktur dann zum Herstellen des befestigten Zustandes und zum erfindungsgemäßen vollständigen Umhüllen an Randabschnitten, weiter bevorzugt vollständig und kontinuierlich, miteinander verbunden werden kann. Offensichtlich ist eine derartige bevorzugte Weiterbildung sehr einfach in der Handhabung, denn selbst sehr schwere mobile Objekte in Form von großen Motorrädern lassen sich auf diese Weise einfach und mit wenig Aufwand in der erfindungsgemäßen Weise vollständig umhüllen. Das nachfolgende Herstellen des befestigten Zustandes kann dann weiter vorteilhaft und zusätzlich weiterbildungsgemäß etwa durch eine verschließbare Kordel- bzw. Drahtstruktur erfolgen, welche in ansonsten bekannter Weise durch eine randseitig umlaufende Mehrzahl von Ösen der jeweiligen Flächenabschnitte der Planenstruktur geführt werden kann und damit für das vollständige Umhüllen und Befestigen sorgt. Wiederum alternativ dazu kann die erfindungsgemäße Planenstruktur auch von oben oder seitlich über das mobile Objekt gezogen werden und wird dann durch ein Verschlussmittel verschlossen.

Dabei ist auch eine Variante bevorzugt, bei der am Rand der Planenstruktur eine Vielzahl von Ösenelementen vorgesehen ist. Zum Verschließen der Planenstruktur können die Ösenelemente, als Alternative oder Ergänzung zu den oben beschriebenen Ösenausbildungen, zunächst ineinander gesteckt oder auf andere Weise miteinander verbunden werden, wodurch dann von den Ösenelementen eine tunnelartige Durchführung für eine (starre) Kordel gebildet wird. Durch die von den Ösenelementen gebildete Durchführung kann dann zum Verschließen der Planenstruktur eine Kordel durchgeführt werden. Dies ermöglicht ein schnelles und komfortables Sichern der Planenstruktur, da die Kordel nicht durch jede Öse einzeln durchgesteckt werden muss.

Alternativ sind etwa (wiederum vorteilhaft und weiterbildend gesondert abschließbare) Reißverschlüsse zum Herstellen der randseitigen Verbindung ebenso denkbar wie beispielsweise etwa randseitige Faltungen oder Umschläge, welche dann zum Verschließen geeignet gefaltet und über die oben erwähnte Kordel und Ösenanordnung zugriffsgeschützt fixiert werden können.

Neben einfacher Handhab- und Bedienbarkeit zeichnen sich diese erfindungsgemäßen Weiterbildungen durch eine leichte Herstellbarkeit aus und ermöglichen damit den erfindungsgemäßen Zugriffsschutz in besonders eleganter Weise.

Die vorliegende Erfindung sieht vor, die erfindungsgemäße Planenstruktur zum Zugriffsschutz zu verschließen. Eine besonders vorteilhafte Weiterbildung der Erfindung basiert auf dem Gedanken, diese damit ohnehin vorhandenen Verschlussmittel zu benutzen, um damit zusätzlich die Umhüllung (im montierten Zustand) und damit das geschützte Objekt (als ganzes) an einer externen Bezugsposition zu fixieren, so dass damit synergistisch nicht nur die erfindungsgemäße Planenstruktur gesichert ist, sondern zusätzlich die Gesamtordnung gleichermaßen gegen ein unbeabsichtigtes Entfernen geschützt werden kann. Etwa im Fall der vorbeschriebenen vorteilhaften Weiterbildung mittels Kordelstruktur, welche dann durch ein dieser zugeordnetes Schloss gesichert werden würde, würde damit in der praktischen Realisierung dieser Weiterbildung das vorgesehene Schloss zusätzlich für diese externe Fixpunktmontage eingesetzt werden können und damit die verschiedenen Sicherungszwecke mit einer einzelnen Schlosseinheit realisieren können.

Als besonders zweckmäßig hat sich die zusätzlich erfindungsgemäß vorgesehene Weiterbildung herausgestellt, das Textil- bzw. Kunststoffgewebe mit einer wasserundurchlässigen bzw. feuchtigkeitsabweisenden Beschichtung zu versehen, welche zudem weiter bevorzugt mit einer dekorativen Bedruckung versehbar ist. Vorteilhaft wird damit nicht nur ein ergänzender Witterungsschutz realisiert, auch steht möglichen Werbeträgern dann die erfindungsgemäße großflächige Planenstruktur für Kommunikations- und Werbezwecke zur Verfügung, mit der damit gebotenen Möglichkeit, dass etwa Zweiradbetreiber potentiell auch preisgünstige (nämlich durch Werbeträger subventionierte) erfindungsgemäße Zugriffsschutzvorrichtungen erhalten können. Nicht zuletzt gestattet etwa die Bedruckbarkeit eines glatten, flächigen Textil- bzw. Kunststoffgewebes das Aufbringen von Benutzungs- bzw. Bedienhinweisen, ggf. in Verbindung mit Warnhinweisen an Dritte, einen unbefugten Zugriff zu unterlassen.

In diesem Zusammenhang kann eine bevorzugte Weiterbildung der erfindungsgemäßen Planenstruktur auch mehrschichtig ausgebildet sein. Dabei ist eine Außenschicht vorgesehen, die gegen ultraviolette (UV)-Sonneneinstrahlung resistent ist und/oder eine Wasserundurchlässigkeit der Planenstruktur herbeiführt und somit die unter der Außenschicht angeordneten weiteren und damit speziell reiß- und schnittfeste Schichten vor materialzersetzender Sonneneinstrahlung bzw. Feuchtigkeit schützt. Der mehrschichtige Aufbau der Planenstruktur umfasst dabei bevorzugt auch eine, insbesondere Aramid (bzw. die reißfesten und schnittfesten Materialen) umfassende, schnittfeste Schicht zur Verbesserung der Reisfestigkeit der Planenstruktur, sowie eine zusätzliche (und dann bevorzugt der UV- bzw. feuchtigkeitsresistenten Außenschichten gegenüberliegende und damit eine Dreischichtanordnung ausbildende) Trägerschicht, die für eine verbesserte Stabilität und/oder Steifigkeit der Planenstruktur sorgt. Weiterbildend kann auch eine weiche, bevorzugt gummi- oder schaumstoffartige Innenbeschichtung vorgesehen sein, die vorteilhaft das versehentliche Zerkratzen von lackierten Komponenten des mobilen Objekts verhindert.

Eine weitere bevorzugte Ausführungsform der Erfindung sieht vor, die Planenanordnung mit Mitteln zum lösbaren Befestigen der Plane in einem komprimierten bzw. gefalteten Zustand an dem mobilen Objekt zu versehen, wobei weiter bevorzugt diese Befestigungsmittel einstückig bzw. unlösbar an der Planenanordnung vorgesehen sein können. Erfindungsgemäß vorteilhaft sorgt dies dafür, dass die erfindungsgemäße Planenstruktur, geeignet komprimiert, jederzeit und damit zur beliebigen Nutzung an beliebigen Aufstellungsorten des zu schützenden Objekts mitgeführt und geeignet benutzt werden kann, insbesondere auch ohne die Notwendigkeit, externe zusätzliche Hilfsmittel, etwa in Form von Taschen od.dgl., notwendig zu machen. Im Idealfall könnten diese Befestigungsmittel etwa so ausgestaltet sein, dass mit deren Hilfe die gefaltete Planenstruktur unmittelbar an einem Zweiradrahmen od.dgl. Objektort befestigbar ist, so dass insoweit sowohl der Transport- als auch der Bedienkomfort erhöht ist. Im vorteilhaften Zweiradkontext erweist sich damit die Erfindung auch geeignet für besonders leichte, sportliche Zweiräder, welche gar nicht erst mit Gepäckträgern od.dgl. üblichen Transportmitteln versehen sind.

Ergänzend oder alternativ kann die Planenanordnung mit Mitteln versehen sein, die das lösbare Befestigen der (wiederum geeignet gefalteten bzw. komprimierten) Planenanordnung an einer Bedienperson, etwa in der Art eines Rucksacks am Rücken, vorsieht. In diesem Zusammenhang können auch Fächer bzw. (Innen-)Taschen durch die als Rucksack umfunktionierte Planenanordnung bereitgestellt werden, die es der Bedienperson ermöglichen, Gegenstände darin zu verstauen. Dabei ist es weiterbildend vorteilhaft vorgesehen, wenn diese Fächer nach dem Umhüllen des mobilen Objekts vor Zugriff geschützt im Inneren der Planenstruktur angeordnet sind. Gerade diese vorteilhafte Variante ermöglicht es dann zusätzlich weiterbilden die erfindungsgemäße Planenstruktur im Nichtgebrauch in der Art eines Rucksack oder einer (Umhänge-)Tasche (gegebenenfalls mit geeigneten Gurten) tragbar und mobil auszugestalten, wobei die Fächer bzw. Taschen dann als entsprechende Fächer oder Taschen eines so gebildeten Rucksacks (Umhängetasche) im Tragebetrieb nutzbar sind.

Insbesondere für den Fall einer nicht möglichen oder nicht gewünschten Rahmenmontage im Fall eines Zweirads ist damit eine praktische und flexible Alternative geschaffen, in der vorbeschriebenen Weise die erfindungsgemäße Planenstruktur flexibel zum Gebrauch mitzuführen; dabei sorgt etwa die Tragbarkeit in der Art eines Rucksacks vorteilhaft dafür, dass die Bewegungsfreiheit der Bedienperson beim Führen des mobilen Objekts, also etwa des Zweirades, nicht beeinträchtigt ist.

Eine Realisierungsform der Erfindung sieht vor, dass die erfindungsgemäße Zugriffsschutzvorrichtung über Lokalisierungsmittel verfügt, welche insbesondere einen Navigationsempfänger (etwa entsprechend dem üblichen GPS-Standard) aufweisen, ergänzend oder alternativ eine drahtlose Telekommunikationseinheit, weiter bevorzugt realisiert als Telefon- bzw. GSM-Einheit, aufweist, die bevorzugt im geschlossenen Zustand der Planenanordnung innerhalb und damit vor Zugriff geschützt an der Planenanordnung angeordnet sind. Eine derartige, erfindungsgemäße Ausführungsform verbessert den Diebstahlschutz, sowohl des umhüllten mobilen Objekts, als auch der Einzelteile, dadurch, dass eine Bedienperson von einem entfernten Standort die Möglichkeit einer Lokalisierung der Vorrichtung hat. Vorteilhafter Effekt dieser Ausgestaltung ist zudem der Umstand, dass die Bedienperson, bei einem irrtümlichen Vergessen des Abstellstandorts oder in der Dunkelheit, so zu dem Standort des mit der vorliegenden Erfindung geschützten mobilen Objekts geführt werden kann. Zudem ist zur Realisierung dieser vorteilhaften Weiterbildung die Nutzung weitgehend standardisierter Technologien genügend, so dass diese erfindungsgemäße Komforterhöhung mit begrenztem zusätzlichem Aufwand realisierbar ist.

Gleiches gilt für die zusätzliche erfindungsgemäße Weiterbildung, dass insbesondere die erfindungsgemäßen Verschlussmittel über ein elektronisches Verschlusssystem verfügen, das weiter bevorzugt etwa mit einem Nachfeldkommunikationsgerät, geeigneter Sensorinfrastruktur und damit zusammenhängender Aktorik, versehen ist. Auf diese Weise lässt sich dann über wiederum weitgehend standardisierte Infrastruktur, etwa ein drahtlos angebundenes Smartphone, ein elektronisches Ver- und Entriegeln realisieren, ohne dass ein konkreter manueller Zugriff auf die erfindungsgemäße Vorrichtung geschehen muss. Entsprechend ermöglicht ist damit auch ein Ent- bzw. Verriegeln aus der Distanz, mit der hiermit ermöglichten Gelegenheit, autorisierten Dritten von Ferne diesen Zugriff auf das mobile Objekt freizugeben. Vorteilhafter Nebeneffekt dieser Weiterbildung ist zudem, dass zugehörige Schlüssel nicht ständig mitgeführt werden müssen und damit auch nicht verloren gehen können.

Die Erfindung sieht auch vor, dass die Schutzhülle über Echtzeit-Überwachungsmittel verfügt, in Form, beispielsweise eines Bewegungsmelders, durch den ein akustisches und/oder elektronisch übertragenes Warnsignal ausgelöst wird, wenn eine durch Fremdzugriff auf die Hülle bewirkte Bewegung durch den damit verbundenen Bewegungssensor detektiert wird. Ergänzend oder alternativ ist auch eine Bilderfassung mittels einer zur Datenerfassung und Übertragung eingerichteten Kamera möglich, über die in Kombination mit der GSM-Einheit eine Bildübertragung (bevorzugt in Echtzeit) an eine mobile Datenverarbeitungseinheit (Handy) des Besitzers gesendet wird. Dabei ist auch denkbar, dass in einer optionalen Variante für die Energieversorgung der Datenkamera auf Komponenten des mobilen Objekts, beispielsweise den Akku eines E-Bikes oder Pedelecs, zugegriffen wird. In diesem Zusammenhang ist es weiter bevorzugt, wenn die Echtzeit-Überwachungsmittel (gegebenenfalls samt GSM-Einheit) im Inneren der Planenstruktur angeordnet sind und somit vor dem Zugriff (auch Blickzugriff) durch Unbefugte geschützt sind. Ferner ermöglicht dies synergistisch die Realisierung einer kostengünstigen Energieversorgung der Überwachungsmittel, da die Batterie eines Elektrorades auch für die Energieversorgung der Überwachungsmittel genutzt werden kann. Gleichwohl kann auch eine lose, z. B. kabelgebundene Anbindung an das Verschlusssystem (Verschlussmittel) vorgesehen sein, mechanisch und/oder elektrisch.

Während im Rahmen der vorliegenden Erfindung prinzipiell Schutz für die erfindungsgemäße Vorrichtung zum Zugriffsschutz beansprucht wird, also auch eine unabhängig von einem zu schützenden mobilen Objekt zu vertreibende, in den Verkehr zu bringende und/oder auf andere Weise handzuhabende Planenstruktur, welche in der erfindungsgemäßen Weise ausgestaltet ist, ist gleichwohl die erfindungsgemäße Wirkung besonders sichtbar im Zusammenhang mit einem konkret vorliegenden und zu schützenden mobilen Objekt als System, wobei dieses mobile Objekt zwar besonders bevorzugt in der Art üblicher (hochwertiger) Zweiräder - sowohl Fahrräder, als auch Motorräder - vorliegen kann. Der Schutz der vorliegenden Erfindung ist jedoch nicht auf diese Art von mobilen Objekten beschränkt, vielmehr ist es insbesondere auch vorgesehen und von der vorliegenden Erfindung umfasst, die erfindungsgemäße Vorrichtung zum Zugriffsschutz auch geeignet zu machen für andere mobile Objekte, welche sich von Kinderwagen über Quads, Roller und E-Bikes bis hin zu Sportgeräten und schutzbedürftigen Baugeräten und dgl. Objekten erstrecken, für welche an einem jeweiligen (flexiblen) Einsatzort temporär und jederzeit aufhebbar ein zuverlässiger Zugriffsschutz gemäß der Erfindung zu gewährleisten ist.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: eine Seitenansicht der erfindungsgemäßen Vorrichtung zum Zugriffsschutz gemäß einem ersten Ausführungsbeispiel der Erfindung in teilweise montiertem Zustand an einem Fahrrad als zu schützendem mobilem Objekt;
- Fig. 2:: eine Seitendarstellung analog Fig. 1, jedoch mit einer alternativen Konturierung der großflächig ausgebildeten und wiederum lediglich in teil-montiertem Zustand gezeigten Planenstruktur;
- Fig. 3:: eine Ansicht der erfindungsgemäßen Planenstruktur in einem gefalteten bzw. komprimiertem und in der Art eines Rucksacks zum Rückentransport durch eine Bedienperson geeigneten Zustand;
- Fig. 4, Fig. 5:: zwei Varianten zum Befestigen der erfindungsgemäßen Planenstruktur in einem gefalteten bzw. komprimierten Zustand an einer Rahmenstruktur des das zu schützende mobile Objekt realisierenden Fahrrades mit Laschen als Mittel zum lösbaren Befestigen am Fahrradrahmen;
- Fig. 6:: eine schematische Detaildarstellung der erfindungsgemäßen Mittel zum zugriffsgeschützten Verschließen der Planenstruktur samt zusätzlich daran vorgesehener GSM-Kommunikations- sowie NFC-Betätigungsmittel.

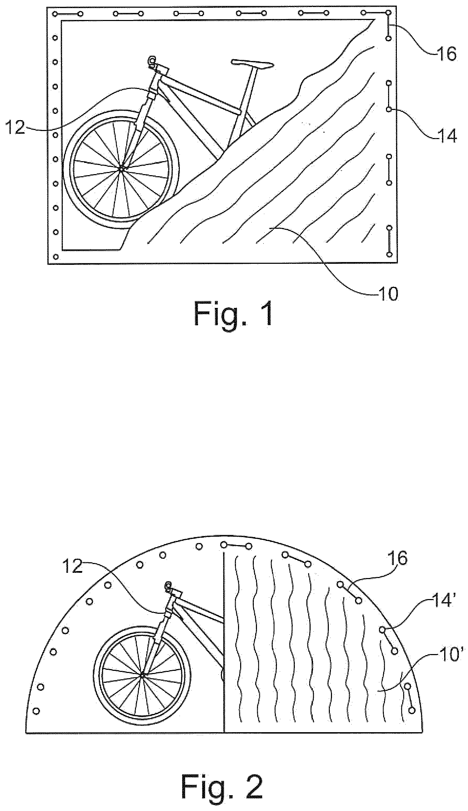

Die Fig. 1 bzw. 2 zeigen Varianten der erfindungsgemäßen Vorrichtung zum Zugriffsschutz gemäß bevorzugter Ausführungsbeispiele zum flexiblen Anbringen an einem Fahrrad als vorteilhaft zu schützendem mobilem Objekt. Eine Planenstruktur 10 ist dabei aus einer großflächigen Plane mit Rechteckabmessungen (Fig. 1) von ca. 2,5m Länge und 3m Höhe vorgesehen; die Variante der Fig. 2 sieht gerundete Ecken einer derartigen Plane vor, welche in der gezeigten Weise durch beidseitiges Auffalten am Fahrrad 12, nach einem Aufschieben dieses Fahrrades auf die am Boden liegende Plane 10, gezeigt ist.

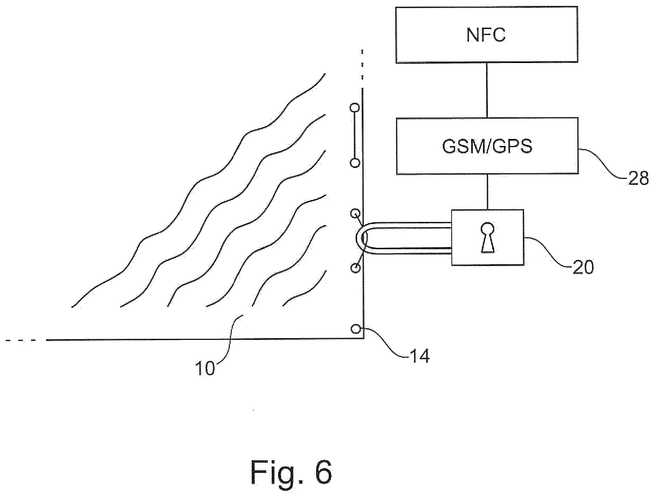

Randseitig umlaufend ist die Plane 10 (bzw. 10' in Fig. 2) versehen mit in regelmäßigen Abständen angeordneten, unlösbar mit einem Aramidmaterial der Planen (Flächengewicht ca. 250 g/m² bis 400 g/m²) vorgesehenen Ösen 14, welche mit einer lichten Innenweite von 10mm zum Hindurchführen einer kunststoffummantelten Stahlkordel 16 ausgebildet sind, welche wiederum an ihren beiden Enden mit einem geeigneten Schloss 20 (Detailansicht Fig. 6) verschließbar ist, um damit die Planenanordnung, welche nach vollständigem Aufbringen das Fahrrad 12 (die Fig. 1, 2 zeigen insoweit den lediglich teilweise montierten Zustand) vollständig umhüllt, zugriffsgeschützt verschließen kann.

Das erfindungsgemäß eingesetzte Aramidmaterial für die Planenstruktur 10 (bzw. 10') ist hochgradig schnitt- und reißfest, wobei dieses Material, mit einer typischen Dicke von 0,8 bis 3mm, bevorzugt 1 bis 2mm, mindestens die in der Norm DIN-EN 388 für Handschuhe geregelten Anforderungen der Stufe 3, bevorzugt 4, im Hinblick auf Schnittfestigkeit, Reißfestigkeit und Stichfestigkeit erfüllt. Zusätzlich und in den Figuren nicht im Detail gezeigt ist die Planenstruktur versehen mit einer PVC-Beschichtung, welche auf eine Flachseite des Aramid-Gewebes aufgebracht ist und, geeignet durch den Benutzer wählbar, entweder nach innen oder nach außen montiert werden kann. Insbesondere mit Außenwirkung ergibt sich ein vorteilhafter Staub- und Nässeschutz, in Verbindung mit der Möglichkeit, in der vorbeschriebenen Weise eine dekorative Bemusterung bzw. Bedienhinweise aufzudrucken.

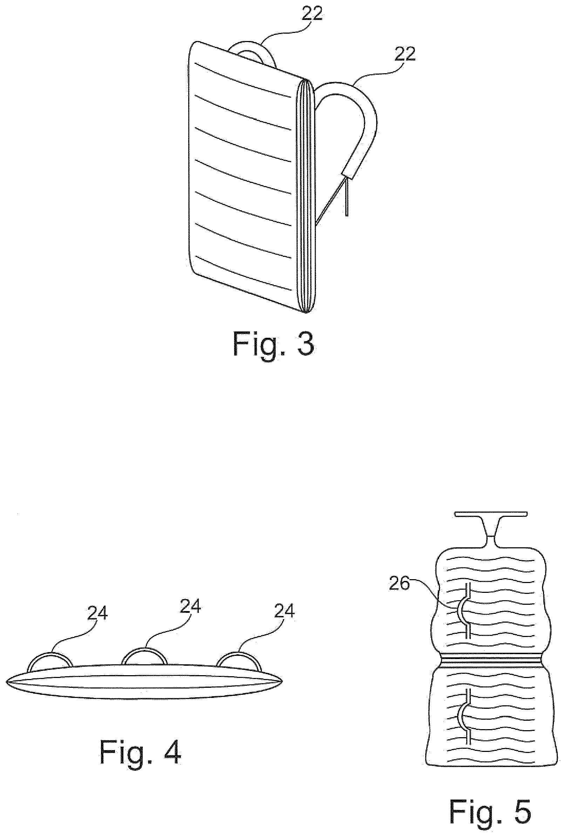

Die Fig. 3 bis 5 verdeutlichen Möglichkeiten, die in den Fig. 1, 2 in (teil-) montiertem Zustand gezeigte Planenanordnung kompakt zusammengeführt und gefaltet mitzuführen; in der Art einer Rucksackanordnung zeigt die Fig. 3 ein gefaltetes Paket, wobei ein Paar von Trägern 22, weiter vorteilhaft unlösbar durch Annähen, alternativ einstückig, am Material ansitzend, von dem Benutzer als Rucksack benutzt werden kann und so die gefaltete Anordnung in einfacher und sicherer Weise für den Rückentransport durch die Bedienperson geeignet macht. Alternativen sind in den Fig. 4 bzw. 5 gezeigt; die hier skizzierten Faltanordnungen mit Befestigungslaschen 24 (Fig. 4) bzw. 26 (Fig. 5) ermöglichen in der skizzierten Weise eine Befestigung an Vertikal- bzw. Querrahmen des exemplarisch für das mobile Objekt heranzuziehenden Fahrrades.

Die schematische Ansicht der Fig. 6 zeigt in der teilweisen Blockschaltbildansicht, wie, in Ergänzung zum primär mechanischen Verschluss durch das Schloss 20 als Mittel zum zugriffsgeschützten Verschließen der Planenstruktur, zusätzlich elektronische Mittel vorgesehen sein können, welche in Form der GSM/GPS-Funktionseinheit 28, etwa realisierbar durch handelsübliche und modular erhältliche Mobilfunktechnologie, eine Lokalisierung ermöglichen, dergestalt, dass etwa ein zugeordneter SiRF-Empfänger die Funkeinheit 28 mit GPS-Navigationsdaten versieht, welche dann, etwa im Rahmen einer geeigneten drahtlosen Anbindung an eine externe Telekommunikationseinheit, zu dieser übertragen werden können. Wiederum ergänzend bietet eine derartige, drahtlos angebundene Einheit (etwa ein übliches Smartphone) die Möglichkeit, über eine NFC-Einheit (NFC = Near Field Communication) eine Fernsteuerfunktionalität des Schlosses 20 zu realisieren, welches dann insoweit auch elektromechanische Komponenten bzw. geeignete Aktuatoren (nicht gezeigt) aufweist, um insoweit dann etwa durch Fernbetätigung ver- bzw. entriegelt werden zu können.

Die vorliegende Erfindung ist nicht auf die gezeigten Ausführungsbeispiele beschränkt. Vielmehr ist sowohl die Anwendbarkeit der Erfindung auf verschiedenste zu schützende mobile Objekte prinzipiell unbegrenzt, genauso wie Kontur, Verschließmechanismus und/oder die Art der konkreten Sicherung entsprechend einem jeweiligen Zweck geeignet ausgewählt werden kann.

## Patentansprüche

1. Vorrichtung zum Zugriffsschutz auf ein Zweirad (12) mit einer aus einem flexiblem Material hergestellten, am Zweirad (12) befestigbaren Planenanordnung, die zumindest abschnittsweise einen Sichtschutz auf das Zweirad (12) im befestigen Zustand ermöglicht, wobei die Planenstruktur (10) so ausgebildet ist, dass sie das Zweirad (12) vollständig umhüllen kann, und dass der Planenanordnung Mittel zum zugriffsgeschützten Verschließen (20) der Planenstruktur (10) zugeordnet sind, wobei die Planenstruktur aus einem schnittfesten, durch manuellen Angriff nicht zerreißbaren Textil- und/oder Kunststoffgewebe besteht,
**dadurch gekennzeichnet,**
**dass** die Vorrichtung zum Zugriffsschutz mit Echtzeit-Überwachungsmitteln ausgestattet ist, wobei die Echtzeit-Überwachungsmittel im Inneren der Planenstruktur angeordnet sind.

2. Vorrichtung nach Anspruch 1,
**dadurch gekennzeichnet,**
**dass** das Textil- bzw. Kunststoffgewebe Aramid (Handelsnahme Kevlar) oder synthetische Chemiefasern, insbesondere auf Basis von Polyethylen, aufweist.

3. Vorrichtung nach einem der vorherigen Ansprüche,
**dadurch gekennzeichnet,**
**dass** die Planenstruktur (10) großflächig so ausgestaltet ist, dass diese quadratisch oder mit Vieleck-Kontur ausgestaltet ist und eine Mindestkantenlänge von 1m, bevorzugt 1,5m, weiter bevorzugt 2m, aufweist, und/oder die quadratische Planenstruktur (10) eine Mindestkantenlänge von 0,3m x 0,3m, bevorzugt 0,4m x 0,4m, weiter bevorzugt 0,5m x 0,5m, aufweist.

4. Vorrichtung nach einem der vorherigen Ansprüche,
**dadurch gekennzeichnet,**
**dass** die Planenstruktur (10), insbesondere in einem vorgesehenen Zweiradlenkerbereich, eine lokale Materialoberflächenvergrößerung, bevorzugt in der Art einer Ausbuchtung oder Ausbeulung, aufweist.

5. Vorrichtung nach den vorherigen Ansprüchen,
**dadurch gekennzeichnet,**
**dass** die Planenstruktur (10) aus einer großflächigen Flächenstruktur besteht, auf welche Zweirad (12) aufbringbar ist und welche zum Herstellen des befestigten Zustandes und zu dem vollständigen Umhüllen an Randabschnitten miteinander verbunden werden kann.

6. Vorrichtung nach Anspruch 5,
**dadurch gekennzeichnet,**
**dass** die großflächige Flächenstruktur randseitig eine Mehrzahl von Ösen (14) aufweist, die zum Zusammenwirken mit einer verschließbaren Kordelstruktur (16) als Mittel zum Verschließen (20) ausgebildet sind.

7. Vorrichtung nach Anspruch 5 oder 6,
**dadurch gekennzeichnet,**
**dass** die Mittel zum Verschließen (20) zusätzlich ausgebildet sind, um die Umhüllung in einem am Zweirad (12) befestigten Zustand an einem festen externen Objekt geschützt lösbar zu fixieren.

8. Vorrichtung nach einem der vorherigen Ansprüche,
**dadurch gekennzeichnet,**
**dass** das Textil- bzw. Kunststoffgewebe zur Herstellung einer mehrschichtigen Planenstruktur (10) mit einer wasserundurchlässigen oder feuchtigkeitsabweisenden Beschichtung versehen ist, die bevorzugt mit einer dekorativen Bedruckung versehbar ist.

9. Vorrichtung nach einem der vorherigen Ansprüche,
**dadurch gekennzeichnet,**
**dass** die Planenanordnung insbesondere einstückig und/oder unlösbar ansitzend Mittel (24; 26) zum lösbaren Befestigen der in einem komprimierten und/oder gefalteten Zustand vorliegenden Planenstruktur (10) an dem Zweirad (12) aufweist.

10. Vorrichtung nach einem der vorherigen Ansprüche,
**dadurch gekennzeichnet,**
**dass** die Planenanordnung über Mittel (22) verfügt, die es ermöglichen, die Planenanordnung am Körper einer Bedienperson, insbesondere in der Art eines Rucksacks, zu tragen.

11. Vorrichtung nach einem der vorherigen Ansprüche,
**dadurch gekennzeichnet,**
**dass** die Planenanordnung mit einer Tasche und/oder einem Fach versehen ist, welche/r im befestigen Zustand auf einer auf das Zweirad (12) gerichteten Innenfläche der Planenanordnung vorgesehen ist und/oder welche/r die Nutzung der zusammengelegten Plananordnung zum Transport als Rucksack oder Tasche, bevorzugt Umhängetasche, ermöglicht.

12. Vorrichtung nach einem der vorherigen Ansprüche,
**dadurch gekennzeichnet,**
**dass** die Vorrichtung zum Zugriffsschutz über Lokalisierungsmittel, insbesondere einen GPS-Empfänger und/oder eine GSM-Einheit (28), verfügt.

13. Vorrichtung nach einem der vorherigen Ansprüche,
**dadurch gekennzeichnet,**
**dass** das Mittel zum Verschließen (20) über ein elektronisches Schließsystem verfügen, das insbesondere über einen Nahfeldkommunikationssensor (Near Field Communication, NFC) Sensor verfügt.

14. System aufweisend die Vorrichtung zum Zugriffsschutz nach einem der Ansprüche 1 bis 13 sowie ein darin aufgenommenes Zweirad (12) im befestigen Zustand der Planenstruktur (10), wobei das Zweirad (12) ausgewählt ist aus der Gruppe bestehend aus: Zweirad, Motorrad, Mofa, Roller, E-Bike, Pedelec.

## Claims

1. A device for access protection of a two-wheeler (12), the device comprising a tarpaulin assembly which is made of a flexible material and fixable to the two-wheeler (12) and which allows, at least in certain parts, visual protection to the two-wheeler (12) in the fixed state,
wherein the tarpaulin structure (10) is designed in such a manner that it can cover the entire two-wheeler (12), and that means for access-protected closing (20) of the tarpaulin structure (10) are assigned to the tarpaulin assembly, wherein the tarpaulin structure is made of a cut-resistant textile and/or plastic fabric which cannot be torn by manual attack,
**characterized in that**
the device for access protection is equipped with real-time monitoring means, wherein the real-time monitoring means are disposed inside the tarpaulin structure.

2. The device according to claim 1,
**characterized in that**
the textile or plastic fabric has aramid (trade name Kevlar) or synthetic chemical fibers, in particular on the basis of polyethylene.

3. The device according to any one of the preceding claims,
**characterized in that**
large areas of the tarpaulin structure (10) are realized in such a manner that the tarpaulin structure (10) has a square or polygon contour and a minimum edge length of 1 m, preferably 1.5 m, more preferably 2 m, and/or that the square tarpaulin structure (10) has a minimum edge length of 0.3 m x 0.3 m, preferably 0.4 m x 0.4 m, more preferably 0.5 m x 0.5 m.

4. The device according to any one of the preceding claims,
**characterized in that**
the tarpaulin structure (10) has a local material surface enlargement, preferably in the form of an indentation or a bulge, in particular in a provided two-wheeler handlebar area.

5. The device according to the preceding claims,
**characterized in that**
the tarpaulin structure (10) is composed of a large surface structure onto which the two-wheeler (12) can be moved and whose edge sections can be connected to one another in order to establish the fixed state and to cover the entire two-wheeler (12).

6. The device according to claim 5,
**characterized in that**
the edge of the large surface structure has a plurality of grommets (14) which are configured to interact with a closable cord structure (16) as means for closing (20).

7. The device according to claim 5 or 6,
**characterized in that**
the means for closing (20) are additionally configured to detachably fix the cover to a fixed external object in a protected manner when the cover is fixed to the two-wheeler (12).

8. The device according to any one of the preceding claims,
**characterized in that**
the textile or plastic fabric is provided with a waterproof or moisture-repellent coating in order to produce a multilayer tarpaulin structure (10), wherein the coating can preferably be provided with a decorative print.

9. The device according to any one of the preceding claims,
**characterized in that**
the tarpaulin assembly has means (24; 26), in particular means formed in one piece therewith and/or connected thereto in an undetachable manner, for the detachable fixation of the tarpaulin structure (10) present in a compressed and/or folded state to the two-wheeler (12).

10. The device according to any one of the preceding claims,
**characterized in that**
the tarpaulin assembly has means (20) by means of which the tarpaulin assembly can be carried on the body of an operator, in particular in the form of a backpack.

11. The device according to any one of the preceding claims,
**characterized in that**
the tarpaulin assembly is provided with a pocket and/or a compartment which is provided on an inner surface of the tarpaulin assembly facing the two-wheeler (12) in the fixed state and/or which allows the use of the folded tarpaulin assembly for transport as a backpack or a bag, preferably a shoulder bag.

12. The device according to any one of the preceding claims,
**characterized in that**
the device for access protection has locating means, in particular a GPS receiver and/or a GSM unit (28).

13. The device according to any one of the preceding claims,
**characterized in that**
the means for closing (20) have an electronic locking system, which is in particular provided with a near field communication (NFC) sensor.

14. A system comprising the device for access protection according to any one of claims 1 to 13 and a two-wheeler (12) accommodated therein in the fixed state of the tarpaulin structure (10), the two-wheeler (12) being selected from the group consisting of: two-wheelers, motorcycles, mopeds, scooters, electric two-wheelers, and pedelecs.

## Revendications

1. Dispositif de protection d'accès d'un véhicule à deux roues (12), le dispositif comprenant un ensemble de bâches en matériau flexible qui peut être fixé au véhicule à deux roues (12) et qui permet, au moins par sections, une protection contre la vue pour le véhicule à deux roues (12) dans l'état fixé,
la structure de bâche (10) étant réalisée de telle manière qu'elle peut envelopper tout le véhicule à deux roues (12), et que des moyens pour la fermeture à accès protégé (20) de la structure de bâche (10) sont assignés à l'ensemble de bâches, la structure de bâche étant en tissu textile et/ou plastique qui est résistant à la coupe et qui ne peut pas être déchiré par attaque manuel,
**caractérisé en ce que**
le dispositif de protection d'accès est équipé de moyens de contrôle en temps réel, les moyens de contrôle en temps réel étant disposés à l'intérieur de la structure de bâche.

2. Dispositif selon la revendication 1,
**caractérisé en ce que**
le tissu textile ou plastique a de l'aramide (nom commercial Kevlar) ou des fibres chimiques synthétiques, notamment sur la base de polyéthylène.

3. Dispositif selon l'une quelconque des revendications précédentes,
**caractérisé en ce que**
de grandes surfaces de la structure de bâche (10) sont réalisées de telle manière que la structure de bâche (10) est carrée ou a un contour de polygone et a une longueur d'arête minimale de 1 m, de préférence 1,5 m, plus préférentiellement 2 m, et/ou que la structure de bâche (10) carrée a une longueur d'arête minimale de 0,3 m x 0,3 m, de préférence 0,4 m x 0,4 m, plus préférentiellement 0,5 m x 0,5 m.

4. Dispositif selon l'une quelconque des revendications précédentes,
**caractérisé en ce que**
la structure de bâche (10) a une augmentation de surface de matériau locale, de préférence sous la forme d'un renflement ou d'une protubérance, notamment dans une partie de guidon de véhicule à deux roues prévue.

5. Dispositif selon l'une quelconque des revendications précédentes,
**caractérisé en ce que**
la structure de bâche (10) se compose d'une grande structure de surface sur laquelle le véhicule à deux roues (12) peut être placé et dont des parties de bord peuvent être reliées l'une à l'autre afin d'établir l'état fixé et de réaliser l'enveloppement complet.

6. Dispositif selon la revendication 5,
**caractérisé en ce**
**qu'**une pluralité d'œillets (14) est prévue au bord de la grande structure de surface, les œillets étant destinés à interagir avec une structure de cordon (16) qui peut être fermée comme moyen de fermeture (20).

7. Dispositif selon la revendication 5 ou la revendication 6,
**caractérisé en ce que**
les moyens de fermeture (20) sont destinés en outre à fixer l'enveloppe de manière détachable et protégée à un objet externe fixé lorsque l'enveloppe est fixée au véhicule à deux roues (12).

8. Dispositif selon l'une quelconque des revendications précédentes,
**caractérisé en ce que**
pour la fabrication d'une structure de bâche (10) multicouche, le tissu textile ou plastique est pourvu d'un revêtement imperméable à l'eau ou résistant à l'humidité qui peut être pourvu, de préférence, d'une impression décorative.

9. Dispositif selon l'une quelconque des revendications précédentes,
**caractérisé en ce que**
l'ensemble de bâches a des moyens (24 ; 26) qui sont liés à l'ensemble de bâches, notamment en une pièce et/ou de manière non-détachable, et qui sont destinés à réaliser la fixation détachable de la structure de bâche (10) présent dans l'état comprimé et/ou plié au véhicule à deux roues (12).

10. Dispositif selon l'une quelconque des revendications précédentes,
**caractérisé en ce que**
l'ensemble de bâches a des moyens (22) qui permettent de porter l'ensemble de bâches sur le corps d'un opérateur, notamment sous la forme d'un sac à dos.

11. Dispositif selon l'une quelconque des revendications précédentes,
**caractérisé en ce que**
l'ensemble de bâches est pourvu d'une poche et/ou d'un compartiment qui est prévu(e) sur une surface intérieure de l'ensemble de bâches qui est orientée vers le véhicule à deux roues (12) dans l'état fixé et/ou qui permet d'utiliser l'ensemble de bâches plié pour le transport sous la forme d'un sac à dos ou d'un sac, notamment d'un sac à bandoulière.

12. Dispositif selon l'une quelconque des revendications précédentes,
**caractérisé en ce que**
le dispositif de protection d'accès a des moyens de localisation, notamment un récepteur GPS et/ou une unité GSM (28).

13. Dispositif selon l'une quelconque des revendications précédentes,
**caractérisé en ce que**
les moyens de fermeture (20) ont un système de fermeture électronique qui a notamment un capteur de communication en champ proche (Near Field Communication, NFC).

14. Système comprenant le dispositif de protection d'accès selon l'une quelconque des revendications 1 à 13 et un véhicule à deux roues (12) logé dans le dispositif de protection d'accès dans l'état fixé de la structure de bâche (10), le véhicule à deux roues (12) étant choisi dans le groupe composé de : véhicules à deux roues, motocyclettes, cyclomoteurs, scooters, vélos électriques, vélos à assistance électrique.
